# EUROPEAN PATENT SPECIFICATION

(11) **EP 2 407 802 B1**
(45) Date of publication and mention of the grant of the patent: **25.12.2013**
(21) Application number: 11174054.4
(22) Date of filing: 14.07.2011
(51) Int. Cl.: G01S 7/521, B60R 19/48, G10K 11/00, G01S 15/93

(54) **Transducer device mountable on a vehicle bumper or moulding element, vehicle bumper using such a transducer device and method of assembling the transducer device on a vehicle bumper**
Wandlervorrichtung montierbar an einem Fahrzeugstoßfänger oder Formelement, Stoßfänger mit einem solchen Wandlergerät und Montageverfahren von der Wandlergerät an einem Fahrzeugstoßfänger
Dispositif transducteur monté sur un pare-chocs du véhicule ou élément de formulaire, pare choc de véhicule utilisant un tel dispositif de transducteur et une méthode de montage du dispositif transducteur à un pare-chocs du véhicule

(30) Priority: 15.07.2010 IT MI20101308
(43) Date of publication of application: 18.01.2012
(73) Proprietor: Cobra Automotive Technologies S.P.A., 21100 Varese (IT)
(72) Inventor: Memmola, Serafino, 21100 VARESE (IT)
(74) Representative: Ponzellini, Gianmarco

(56) References cited:
- EP-A1- 1 785 316
- WO-A1-2009/144545
- US-A- 5 235 858
- US-B1- 6 246 154

## Description

The present invention relates to a transducer device mountable on a vehicle bumper or a protection element, or a finishing element, associated to car bodies; the invention further relates to a bumper for vehicles using one or more of the transducer devices and to a mounting process of the transducer device on a bumper; in particular, the invention relates to a transducer device typically used on bumpers of front and/or rear bumpers of motor vehicles with the aim of transferring signals to a suitable control circuit, which signals are capable of revealing the position or distance of the motor vehicle in relation to an obstacle. As is known, present requirements for safety and comfort when driving and manoeuvring have led to the need to provide sensor systems that are ever-more sophisticated, inducing the automobile market to introduce, progressively more and more various sensor systems. In this context, sensor systems have been introduced on front and/or rear bumpers, which sensor systems aim at determining the presence of any obstacles and therefore at aiding the driver of the motor vehicle when driving, by signalling any over-nearing of another vehicle, as well as during specific manoeuvres, for example parking manoeuvres, by signalling the presence and the progressive nearing of any obstacles.

In general, known sensor systems comprise transducer devices having a fastening element which enables mounting a true and proper transducer body to holes afforded on the bumpers.

For example, a first solution comprises an adaptor element housing on one side the body of the transducer organ and on the opposite side, for example by gluing or welding, an internal surface of the bumper.

In a further solution, described in US patent no. US 6039367, a plurality of transducer devices are provided which are mounted to the bumper by means of a tubular support element having a part fixed to the bumper and a part housing the transducer in such a way that once the mounting has been achieved at an internal surface of the bumper, the external surface of the transducer body is substantially flush with the external surface of the bumper.

This type of solution is able to at least partly satisfy the aesthetic requirements of the market; in this matter it is appropriate for the transducer body to have as small a visual impact as possible.

Although the described solution has been widely used, it is clear that with the aim of obtaining an adequate aesthetic effect and a suitable positioning of the transducer body, the various components have to be very precisely dimensioned, and a perfect knowledge of the widths of the bumpers is required at the position of the holes is required, where the transducer devices are to be engaged, as well as a careful assembly process. Further, with the aim of obtaining precise assemblies, transducer devices having supports for the transducer body must be constructed which have a differentiated structure depending on the thickness of the bumper wall.

In other words, although from the theoretical point of view the above-described technical solution appears to be adequate, in reality considerable precision in realisation and assembly are required in order for truly functioning products to be obtained, which are also aesthetically acceptable.

Also known is a technical solution described in European patent no. EP 981763, which discloses a transducer provided with a coupling device that is associable to the internal surface of bumpers. In this type of solution the impact of the transducer on the aesthetic appeal of the bumper is reduced to a minimum, as the transducer is visible only at a portion of its head, which is positioned flush with the external surface of the bumper.

Although the above-described European Patent solution satisfies the aesthetic requirements, it is worthy of note that this solution does not resolve the problem of having to size each support body of the transducer to the various thicknesses which bumpers can present; nor does it solve the problem of having to guarantee extremely precise manufacturing tolerances.

US5235858 A is describes a transducer device with a transducer organ and a support body defining a seating for receiving the transducer organ, and an anchoring element having a first portion, fixable to a surface of a platform, and a second portion, able to engage with a corresponding engaging portion borne by the support body, a portion of either the second portion or the engaging portion having a plurality of recesses cooperating with at least a protuberance borne by another of the second portion and the engaging portion in order to fix at a selected position the support body and transducer to the anchoring element.

A further technical solution is described in application WO 2009/144545 in which an annular element is included between the end of the tubular support body housing the transducer element and the circular cavity present on the bumper; in particular, the annular element is positioned at and frontally of the front end of the support body such as to be interposed between the front part of the cylindrical head of the transducer body and the hole in which the transducer body is inserted and positioned.

This technical solution not only guarantees an excellent aesthetic finish, but also provides good insulation for the sensor body from any vibrations acting on the bumper, and thus overall provides a sensor organ which is capable of operating more efficiently, preventing false alarms or inability to detect obstacles. Although in particular the last above-described technical solution is able to provide excellent performance, the applicant has found that the transducer devices of the above-described type can be further improved upon.

### DISCLOSURE OF THE INVENTION.

A particular aim of the present invention is to provide a novel transducer device which can be precisely positioned at a seating present in for example a protection/finishing element, such as a vehicle bumper, without any negative impact on the aesthetics of the bumper itself.

A further aim of the invention is to provide a new transducer device that can be adequately mounted on any type of bumper, substantially independently of the thickness of the wall thereof.

Further, an additional aim of the invention is to make available a transducer device which can be appropriately positioned without any need for a too-strict production precision, as the transducer can suitably compensate for any manufacturing error.

One or more of the above-mentioned aims is substantially attained by a transducer device according to one or more of the accompanying claims.

Aspects of the invention are now described.

In a first aspect a transducer device for vehicle protection elements is provided, comprising: at least a transducer organ; at least a support body defining a seating for receiving the transducer organ, and an anchoring element having a first portion, fixable to an internal surface of the protection element, and at least a second portion, able to engage with a corresponding engaging portion borne by the support body. One from either the second portion or the engaging portion exhibits one or more recesses cooperating with at least a protuberance borne by another of the second portion and the engaging portion in order to define a plurality of relative positions between the support body and the anchoring element which positions are axially different from one another.

In a second aspect, according to the first aspect, the engaging portion on the support portion and the second portion of the anchoring element are coupled by relative rotation about a common axis (transversal with respect to the hole in which the device will have to be inserted when applied) such that following a relative rotation between the second portion and the engaging portion there is a relative axial translation between the support body and the anchoring element. In a third aspect, according to the second aspect, the second portion comprises an active surface defining one or more recesses or alternatively one or more protuberances. The active surface of the anchoring element has an inclined development, forms an acute angle with respect to the common axis of rotation and conjoins with at least a corresponding active surface defined by the engaging portion. The active surface of the engaging portion also exhibits one or more protuberances or one or more recesses; the cooperation between the active surfaces enables generation of an axial movement following a relative rotation about the common axis, thanks to the inclination of the active surfaces with respect to the common axis, enabling positioning the support body and the transducer body in the plurality of relative positions with respect to the anchoring element.

In a fourth aspect according to any one of the preceding aspects, the transducer body is at least partly housed internally of the seating and is axially solidly constrained to the support body.

In a fifth aspect according to any one of the preceding aspects, the one or more recesses borne by the second portion or by the engaging portion form a threading capable of engaging with a corresponding threading defined by the one or more protuberances respectively borne by the engaging portion or the second portion.

In a sixth aspect according to the fourth or fifth aspect, the support body comprises a terminal centring lip (24) destined to insert and guide the device (1) in a hole present on a bumper or other protection element.

In a seventh aspect according to any one of the preceding aspects, the axial extension of the seating defined by the support body is substantially equal to the axial extension of the transducer body which is therefore entirely housed internally of the seating.

In an eighth aspect according to the sixth aspect, the axial extension of the seating is substantially equal to the axial extension of the transducer body which is therefore entirely housed internally of the seating such that a frontal surface of the transducer body is substantially flush with an attachment edge of the centring lip.

In a ninth aspect according to any one of the preceding aspects, the one or more recesses borne by the second engaging portion or the engaging portion form a threading capable of engaging with a corresponding threading defined by the one or more protuberances defined by the one or more protuberances respectively borne by the engaging portion or by the second portion, wherein the threading of the engaging portion is present on a radially external surface of the support body and inserts in the threading associated to the second portion which extends on a radially internal surface of the anchoring element.

In a tenth aspect according to any one of the preceding aspects, at least a seal element is provided, interposed between a lateral external surface of the sensor body and an internal surface of the support body and/or between an external lateral surface of the sensor body and the anchoring element.

In an eleventh aspect according to the preceding aspect, two seal elements are included, being a first seal element as in the tenth aspect and additionally a further seal element that is axially separated from the first seal element.

In a twelfth aspect according to the preceding aspect the seal element (or first seal element) exhibits a smaller axial development than the axial development of the transducer body and the further seal element is fixed to the anchoring element, for example it is comoulded or glued.

Ina thirteenth aspect according to any one of the preceding aspects, at an opposite end with respect to the engaging portion the support body comprises a terminal portion destined to engage a connecting part which comprises a portion housing one or more cables and a portion connected to the terminal portion.

In a fourteenth aspect according to the preceding aspect, the terminal portion of the support body is engaged to the connecting part such that the support body and the connecting part can rotate relatively about the common axis.

In a fifteenth aspect according to the thirteenth aspect, the terminal portion of the support body is engaged to the connecting part such that the support body and the connecting part are angularly solid and cannot rotate relatively about the common axis.

In a sixteenth aspect according to any one of the preceding aspects the engaging body comprises, at an external surface thereof and in an axial consecutive position to the engaging portion, a further portion provided with a plurality of radial elements destined to cooperate with at least a counter-element borne by a guide portion of the anchoring element.

In a seventeenth aspect according to the preceding aspect, the radial elements have a same axial extension.

In an 18th aspect according to the sixteenth or seventeenth aspect, the radial elements comprise angularly equi-distanced projections defining a cogged profile and wherein the guide portion exhibits the counter-element in a form of an elastic portion able to flex in a radial direction in order to cooperate with the projections and define a plurality of stable positions, angularly spaced to one another, in which the elastic portion engages gullies, each defined between two angularly-consecutive projections.

In a nineteenth aspect according to any one of aspects from the first to the fifteenth, the engaging body comprises, at an external surface and in an axially consecutive position to the engaging portion, a further portion provided with a counter-element destined to cooperate with a plurality of radial elements borne by a guide portion of the anchoring element.

In a twentieth aspect according to the preceding aspect, the radial elements have an equal axial extension.

In a twenty-first aspect according to the twentieth or the twenty-first aspect, the radial elements comprise angularly equi-distanced projections defining a cogged profile and wherein the counter-element is in a form of an elastic portion able to flex in a radial direction in order to cooperate with the projections and define a plurality of stable positions, angularly spaced to one another, in which the elastic portion engages gullies, each defined between two angularly-consecutive projections.

In a twenty-second aspect according to any one of the preceding claims, the first portion of the coupling element comprises an annular flange destined to engage with an internal surface of the protecting element or bumper.

In a twenty-third aspect according to any one of the preceding aspects, one of the active surfaces comprises a plurality of recesses which are axially spaced, while another of the active surfaces comprises one or more elastic teeth able to engage with the recesses such that the support body can be positioned in a plurality of different axial positions.

A twenty-fourth aspect comprises a bumper comprising one or more of the devices according to any one of the preceding aspects, each engaged in a corresponding seating of a respective through-seating present on the wall of the bumper.

A twenty-fifth aspect concerns an assembly process of a device (1) of any one of the preceding claims from 1 to 24, for example on a bumper or another protecting element and/or aesthetic finishing element of a vehicle, the procedure comprising stages of:
- coupling the support body housing the transducer body to the anchoring element,
- axially moving the support body with respect to the anchoring element up to reaching a relative axial position between the support body and the anchoring element which is such as to bring about a desired positioning of the front surface of the transducer body once the anchoring element is fixed to the internal wall,
- fastening the anchoring element to the internal wall of the fender or other protecting element and/or aesthetic finishing element of the vehicle at a through-seating afforded on the wall,
   wherein the fastening stage can be performed:
   before the coupling stage of the support body with the anchoring element, or
   after the coupling stage but before the axial movement stage, or after the axial movement stage.

### DESCRIPTION OF THE DRAWINGS

Some embodiments and aspects of the invention will now be described, with reference to the accompanying drawings, provided merely by way of nonlimiting example, in which:
- figure 1 is a section of a portion of bumper to which a transducer device of the present invention has been fitted;
- figure 2 is the device of figure 1 in a perspective and exploded view;
- figure 3 illustrates the device of figures 1 and 2, again in perspective and exploded view, but at a visual angle which is different with respect to the view of figure 2;
- figure 4 is a perspective view from an internal point of view of a bumper of the device of the present invention;
- figure 5 is a view alike to that of figure 4, in which the transducer body has been distanced from the surface of the bumper with the aim of compensating for the thickness of the bumper wall;
- figure 6 is a perspective view of a detail of the device of figures 4 and 5;
- figure 7 is a frontal view of a portion of the outside of a bumper on which the device illustrated in figure 1 is mounted;
- figure 8a is a transversal section of a portion of bumper in which a transducer device is mounted, the transducer device being a variant of the present invention: as will better emerge during the course of the following description, a seal element is provided in this embodiment, acting in direct contact on the bumper wall;
- figure 8b is a transversal section of a portion of bumper having a double thickness with respect to the thickness of figure 8a, in which the transducer device of figure 8a is mounted;
- figure 8c is a front view of a portion of the outside of a bumper to which the device illustrated in figure 8a is associated;
- figure 9 is a perspective and exploded view of the device illustrated in figure 8a;
- figure 10a is a transversal section of a portion of bumper in which a transducer device is mounted, the transducer device being according to a further variant of the present invention;
- figure 10b is a transversal section of a portion of bumper having a double thickness with respect to that of figure 10a, in which the transducer device of figure 10a is mounted;
- figure 11 shows the device of figure 10a in a perspective and exploded view;
- figure 12 is a frontal view of a portion of the outside of bumper to which the device illustrated in figure 10a is associated;
- figure 13a is a transversal section of a portion of bumper in which a transducer device according to a further variant of the present invention is mounted;
- figure 13b is a transversal section of a portion of bumper having a thickness double that of figure 13a in which the transducer device of figure 13a is mounted;

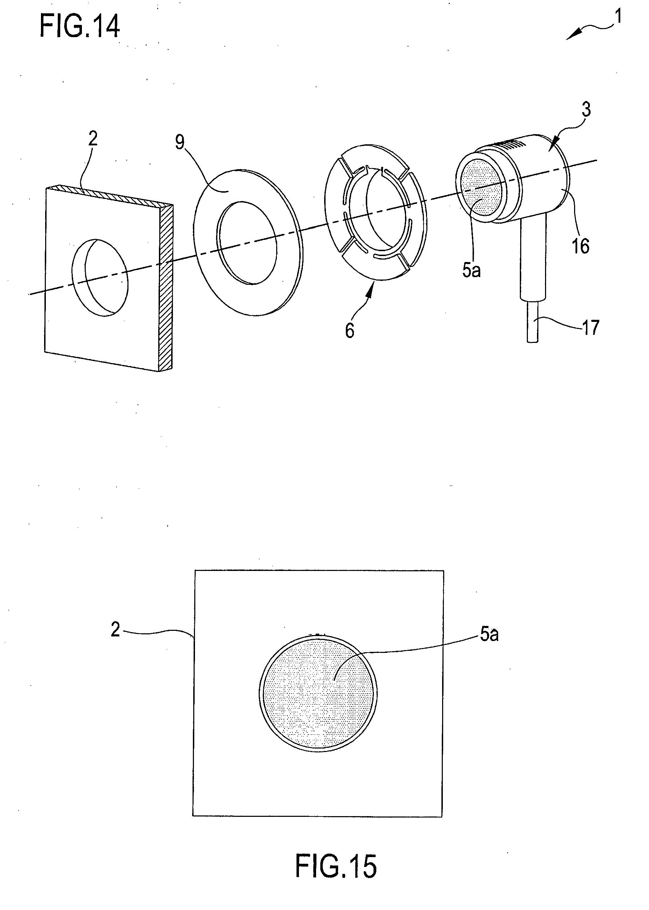

- figure 14 illustrates the device of figure 13a in a perspective and exploded view, and
- figure 15 is a frontal view of a portion of the outside of a bumper to which the device illustrated in figure 13a has been associated.

### DETAILED DESCRIPTION

With reference to the accompanying figures of the drawings, 1 denotes in its entirety a transducer device. The transducer device can be installed on external portions of parts of a vehicle such as moulding, aesthetic finishing elements, impact protection elements (bumpers). In the illustrated examples the device 1 is engaged to a bumper 2, but this must not be interpreted as a limiting aspect. The transducer device 1 comprises a support body 3 defining a seating 4 for receiving at least a portion of a transducer organ 5. The transducer organ 5 can for example comprise one or more transducer elements of an acoustic type, able to emit and/or receive sound waves, or one or more transducer organs of an electromagnetic type, able to emit and/or receive electromagnetic waves such as for example optical signals, or a combination of the described transducer elements. As can be seen in the accompanying figures, an anchoring element 6 engages a portion of the transducer support body 3. The anchoring element 6 exhibits a first portion 7 that is fixable to an internal surface 2a of the bumper 2. For example, in the embodiment illustrated in the accompanying figures, the first portion 7 comprises a flange 8 having a surface to which an adhesive layer 9 is applied for fixing the flange to an internal surface 2a of the bumper 2. The fixing of the flange to the bumper can also be achieved using other techniques, such as welding, for example ultrasound welding, moulding, use of bi-adhesive layers and more besides.

The anchoring element 6 also exhibits a second portion 10 which can engage removably in a corresponding engaging portion 11 borne by the support body 3 such that the engaging portion and the second portion can take on a plurality of differentiated relative axial positions. For example, the second portion 10 and the engaging portion 11 are coupled to one another such that following a relative rotation between the second portion 10 and the engaging portion 11 about a common axis 12, there is a relative axial translation between the support body and the anchoring element. In greater detail, the second portion 10 can comprise at least an active surface 10a, inclined with respect to the rotation axis 12 and able to join with at least a corresponding active surface 11a defined by the engaging portion 11. The two active surfaces extend on the respective lateral surfaces of the second portion 10 and the engaging portion 11, about the axis 12. A rotation between the body 3 and the element 6 leads to a relative dragging between the active surfaces, determining a gradual axial advancing or retreating of the body 3 with respect to the element 6; in this way the body 3 is positionable in a plurality of relative positions with respect to the anchoring element 6. This enables positioning the front surface 5a of the transducer body 5 perfectly flush with the external surface 2b of the bumper 2, as the transducer body 5 is housed internally of the seating 4 and solidly to the support body 3. The active surface 10a of the second portion 10 comprises for example a threading able to engage with a corresponding threading borne by the engaging portion 11 of the support body 3. In the illustrated examples the threading 11a is present on a radially external surface of the support body 3 and inserts in the threading 10a which extends on a radially internal surface of the second portion of the anchoring element 6. As can be noted, both the second portion 10 of the anchoring element 6 and substantially the whole support body 3 exhibit a tubular conformation. Further, the seating 4 also houses at least a seal element 13 which is interposed between the sensor body 5 and the internal surface of the support body 3. The seal element 13 can exhibit a substantially tubular conformation in which a first part 13a develops parallel to the axis 12 and a second part 13b develops transversally of the axis 12, interposing between a terminal surface 5b, opposite the surface 5a, of the transducer body 5 and a portion of base 14 of the support body 11; the base portion 14 of the support body 3 extends consecutively to the engaging portion 11 transversally to the axis 12. It should be noted that the second part 13b exhibits at least a through-passage 13c for enabling passage of electrical connections (not illustrated in that they are of conventional type) between the transducer body and the control circuitry to which the device 1 is connected. At an opposite end with respect to the engaging portion 11 and following the base portion, the support body 3 comprises a terminal portion 15 destined to engage a connecting part 16, for example comprising a small pipe made of a plastic material. The connecting part 16 comprises a portion housing one or more cables 17 and a portion connected to the support body 3 which acts to protect electrical parts 18 interposed between the cable or cables and the sensor body 5. The terminal portion of the support body 3 and the connecting part 16 are coupled such that there is no possibility of reciprocal rotation or, alternatively, such as to be able to rotate relatively, for example with respect to the axis 12. In a case in which the support body 3 is angularly solid with the connecting part 16, the connecting part 16 can serve to indicate the correct position of the transducer body (which is some cases has to be arrange in a precise orientation). In a case in which the connecting part 16 can rotate with respect to the support body, the rotation imposed on the body 3 does not lead to substantial rotations of the connecting part 16 which if so desired can be assembled to the support body 3 even before any axial adjustments thereof are made.

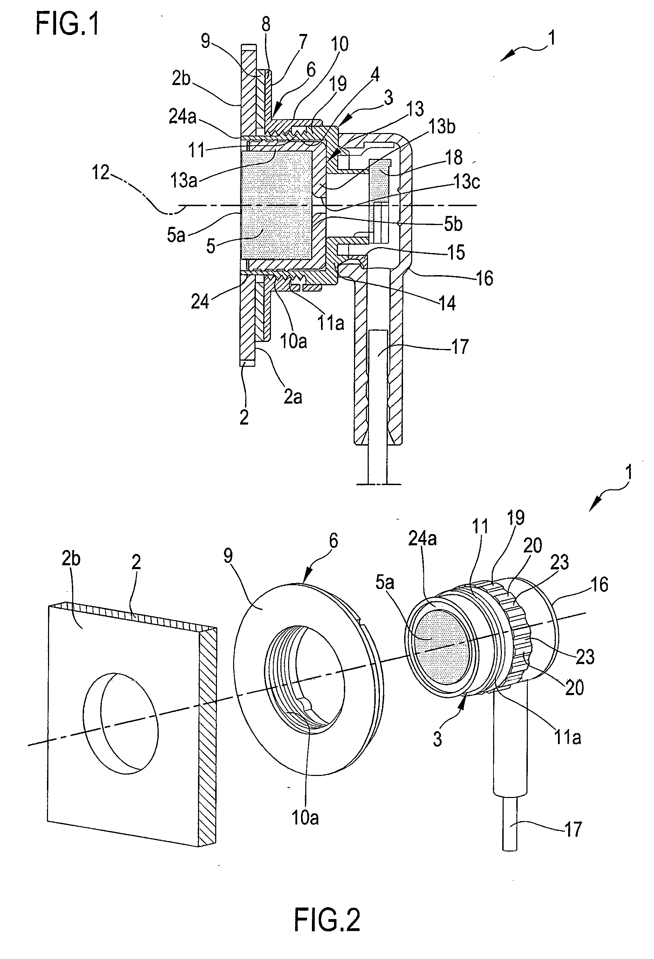

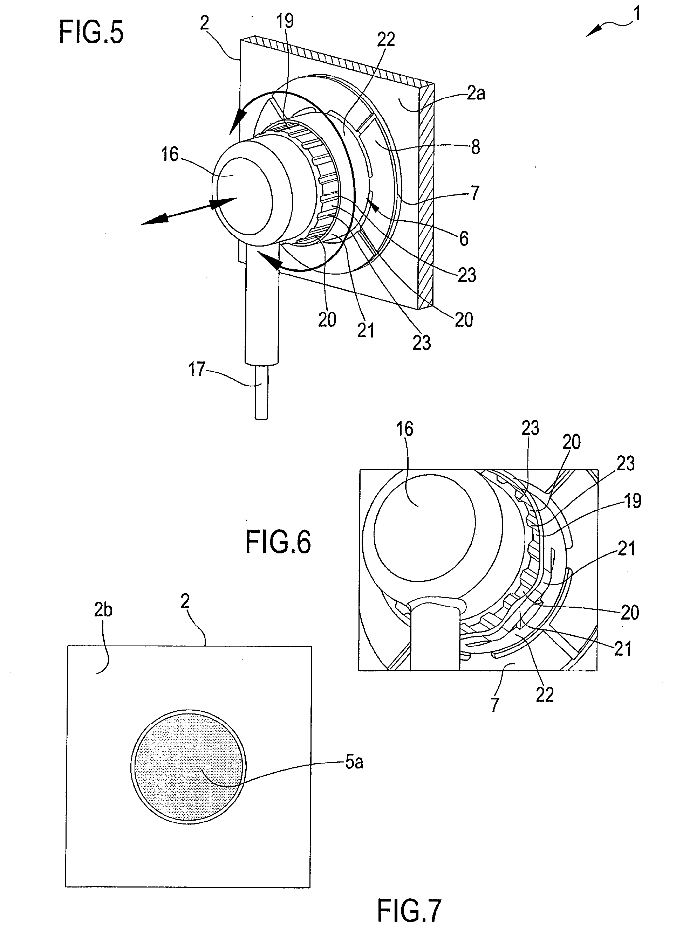

The support body 3 lastly comprises, at an external surface thereof and in an axially consecutive position to the engaging position 11, a further portion 19 provided with a plurality of radial elements 20 destined to cooperate with at least a counter-elements 21 borne by a guide portion 22 of the anchoring element 6 (see figures 2,3,5,6,9 and 11 for this). The radial elements 20 can be for example 10 or more in number. The elements can be defined by angularly equi-spaced projections, for example made in a single piece with the support body 3 defining a cogged profile. In turn the guide portion 22, which can for example exhibit a tubular conformation, exhibits the counter-element 21 in the form of an elastic portion able to flex in a radial direction. For example the counter-element can comprise at least a tooth or elastic tongue capable of cooperating with the projections such as to define a plurality of stable positions, angularly spaced to one another, in which the tongue or tooth engages a gully 23 present between two consecutive projections.

In other words, by rotating the anchoring element 6, the tongue or tooth moves, passing across the projections and becoming positioned time by time in successive gullies present on the support body 3, such that the relative axial movement between the support body 3 and the anchoring element 6 is defined by a plurality of stable equi-spaced positions: for each click of the tongue or cog the tongue or cog positions in a successive gully and consequently, thanks to the elastic thrust, stabilises the position of the support body 3 in relation to the anchoring element; to each angular click corresponds a relative predetermined axial movement between the support body 3 and the anchoring element 6 determined by the angular distance between two angularly consecutive gullies and by the pitch of the threads 11 a and 10a described above.

For example, if the thread pitch is 1 mm, with for example ten radial elements 20, ten stable angular positions can be obtained, and therefore axial advancements of 0.1 mm per click.

Note that alternatively to what is described, the projections can be borne by an internal surface of the anchoring element 6 and the elastic counter-elements can be fashioned on an external surface of the support body 3.

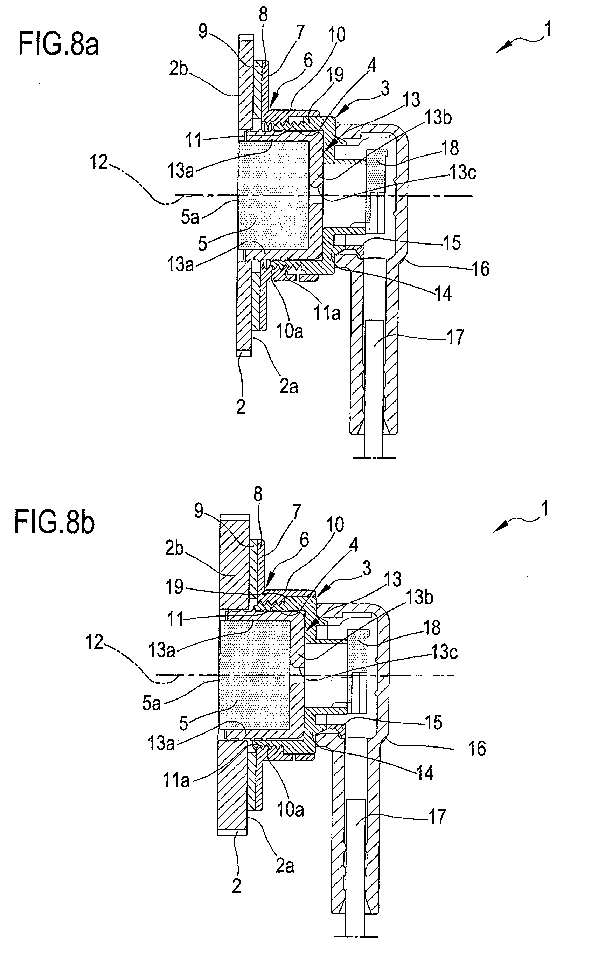

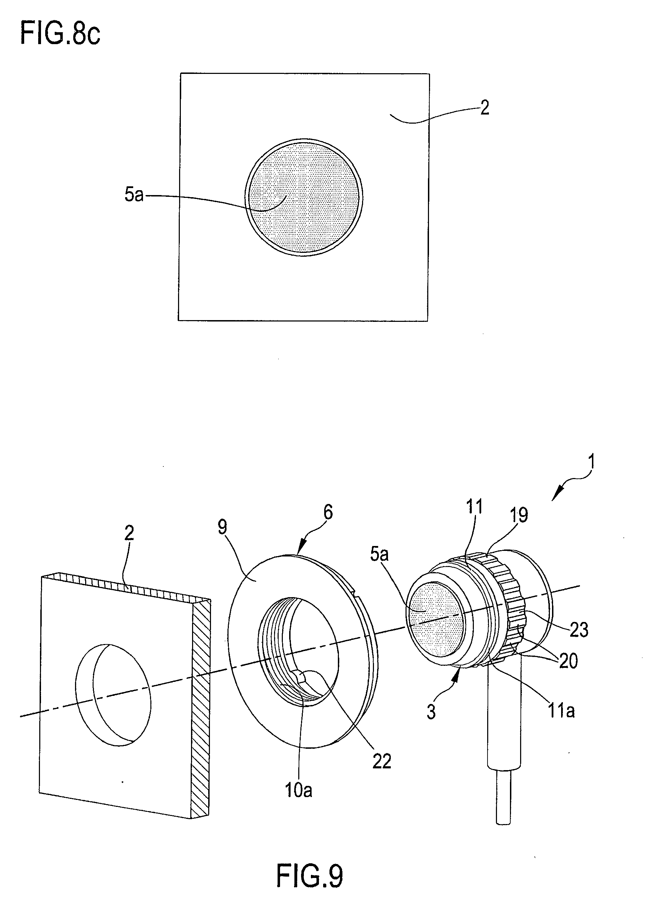

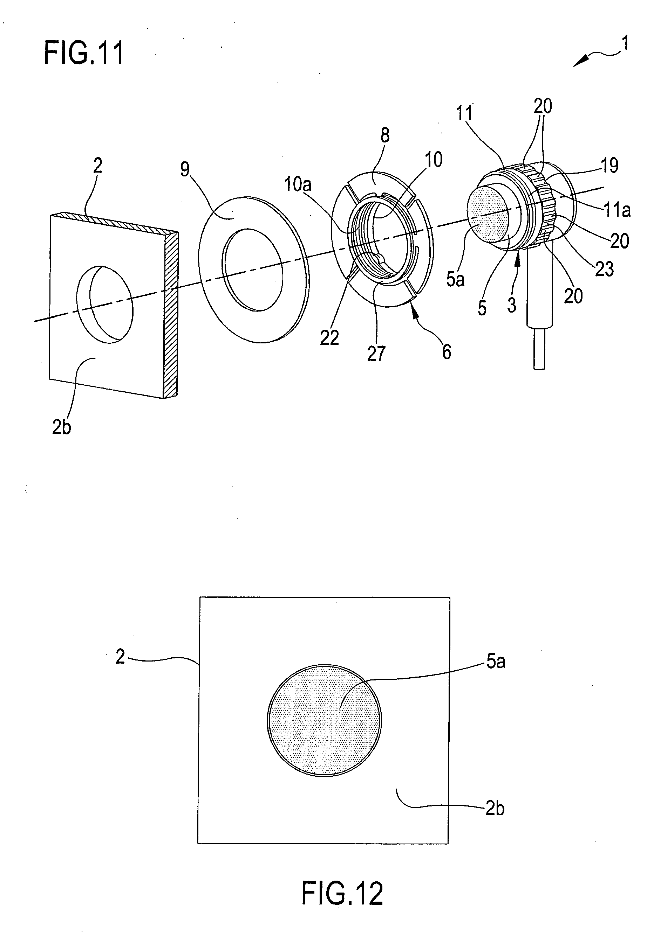

The above-described characteristics are commonly present in all the embodiments illustrated in figures from 1 to 12. There now follows a description of some aspects which differentiate the example of figures from 1 to 7, the example of figures 8 and 9, and the example of figures 11 and 12 from one another.

With reference to the example of figures from 1 to 7, the support body 3 comprises a terminal centring lip 24 axially opposite to the base portion 14. The centring lip 24 is destined to insert and to guide the device 1 in the hole present on the bumper or other protection element 2 on which the device 1 can be installed. Thanks to the presence of the centring lip 24, the axial extension of the seating 4 is substantially the same as that of the transducer body 5 which, therefore, is entirely housed internally of the seating 4 such that the front surface 5a is substantially flush with the attachment body 24a of the centring lip 24. The portion 13a of the seal element exhibits an axial development which is equal to or slightly smaller than that of the seating 4 and the transducer body 5, substantially embracing all or nearly all of the lateral wall of the transducer body. As can be seen in figure 1, when the anchoring element is positioned on the internal surface 2a and the support body is advanced axially such as to bring the surface 5a flush with the surface 2b, the attachment edge 24a is also substantially positioned flush with the external surface 2b of the bumper or other protection element 2. Note that the centring lip 24 is realised in a single piece with the remaining parts of the support body 3 made of a rigid material.

In the embodiment of figures 8 and 9, the centring lip 24 is absent and the axial extension of the seating 4 is smaller both than the axial extension of the transducer body 5 and the axial extension of the seal element 13. The centring of the device 1 in the hole on the bumper 2 wall is actuated by a front lip 13d of the seal element. As can be seen in figure 8, the centring lip 13d can terminate in a slightly retracted position with respect to the front surface 5a.

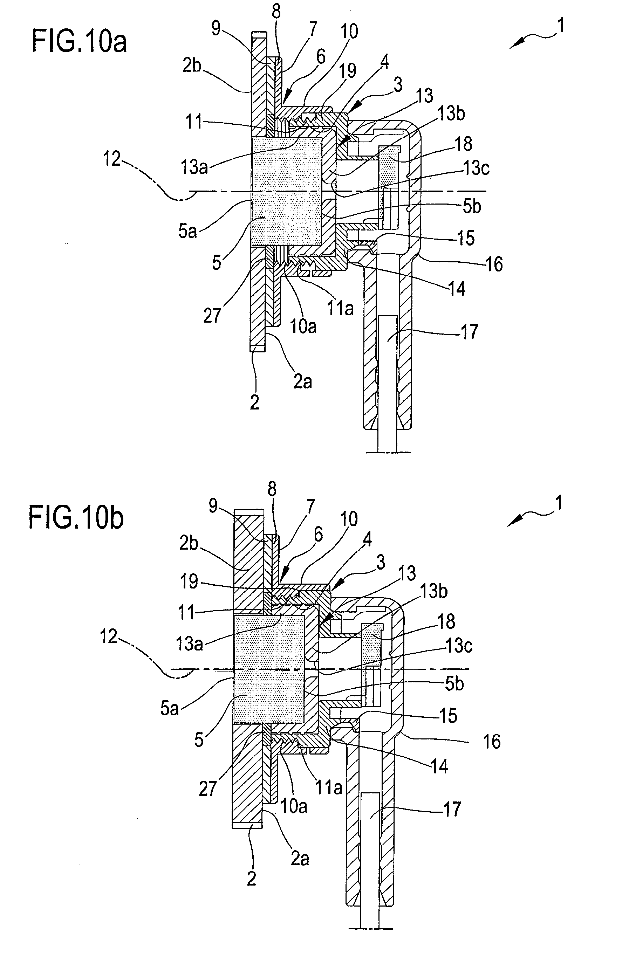

Also in the example of figures 10-12, there is no centring lip 24; the axial extension of the seating 4 is smaller than the axial extension of the transducer body 5 and is substantially equal to the axial extension of the seal element 13. In addition to the seal element 13 there is a further seal element 27, of annular conformation, borne by the anchoring element 6 (for example the second seal element can be glued or comoulded with the anchoring element or fixed thereto with other methods), in a concentric position with respect to the transducer body 5.

The further seal element is positioned axially between the seal element 13 and the front surface 5a of the transducer body 5. More precisely, the further seal element 27 is interposed between an external lateral surface of the transducer body 5 and the anchoring element 6. The further seal element 13 exhibits an internal passage diameter that corresponds to or is slightly smaller than the external diameter of the transducer body 5 such that the transducer body 5 can insert and slide with slight interference internally of the further seal element. Further, the internal passage diameter of second seal element is slightly smaller than the diameter of the hole in which the device 1 is to be mounted, with the aim of preventing a direct contact between the transducer body 5 and the protection element 2. In the example of figures 10 and 11, the further seal element 27 is arranged concentrically to the adhesive layer 9, coaxially with respect to the axis 12.

Lastly, the example of figures from 13a to 15 exhibits a support body 3 with a centring lip 24 entirely similar to that of the device of figure 1. The elements that are common with figure 1 will not be newly described and are represented using the same numerical references in figures from 13a to 15. Differently with respect to the device of figure 1, instead of the threads as described above, the active surfaces 10a and 11a can be conformed as follows with the aim of realising, between the second portion 10 and the engaging portion 11, a coupling in which the two portions can be positioned in a plurality of different relative axial positions. For example, the active surface 10a can comprise a plurality of grooves or recesses 25, axially spaced, for example recesses spaced axially and arranged parallel to one another transversally of the axis 12, while the active surface 11 a can comprise one or more elastic teeth 26 able to engage the grooves such that the support body 3 can be positioned in a plurality of different axial positions with respect to the engaging element 6. Note that the active surface 11a can be the one which defines the grooves or axially-spaced recesses and that the active surface 10b can be the one which exhibits at least an elastic tooth for engaging in the grooves.

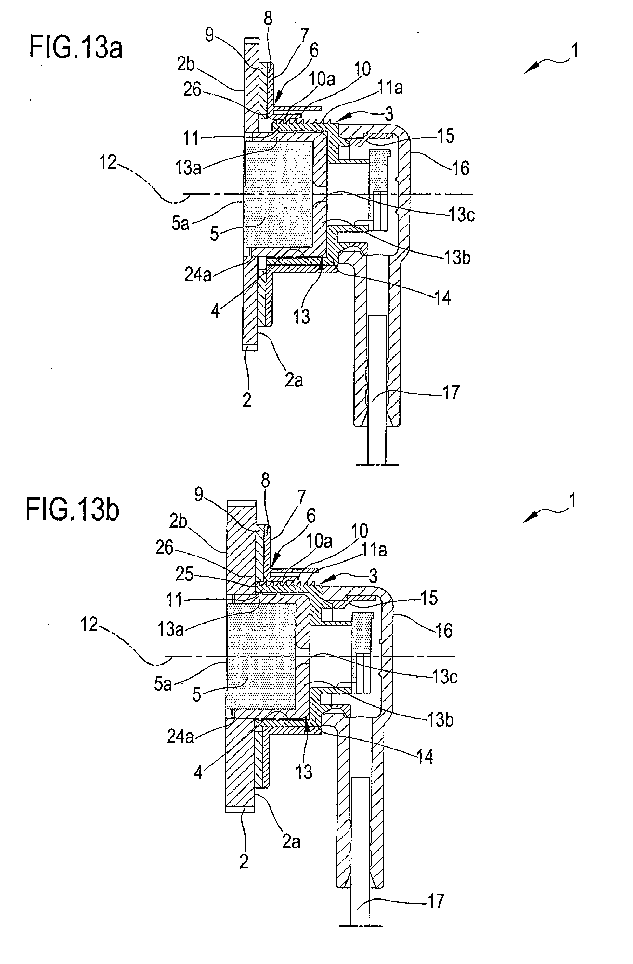

In the example of figure 13a and 13b, an elastic tooth 26 is comprised which cooperates clickingly with a series of recesses 25 that are parallel and located on the external lateral surface of the engaging body 3. The angular extension of the recesses 25 about the axis 12 can be limited to a fraction of a revolution or can involve the whole angular development of the body 3. In this case too the body 3 and element 6 can be relatively moved in clicking movements determined by the engagement of the tooth in axially successive grooves/recesses. The guide portion can be perfectly smooth and can simply slide with respect to the anchoring element 6.

The assembly process of the device 1, for example on a bumper or another protection element and/or aesthetic finishing element of a vehicle, comprises the following steps.

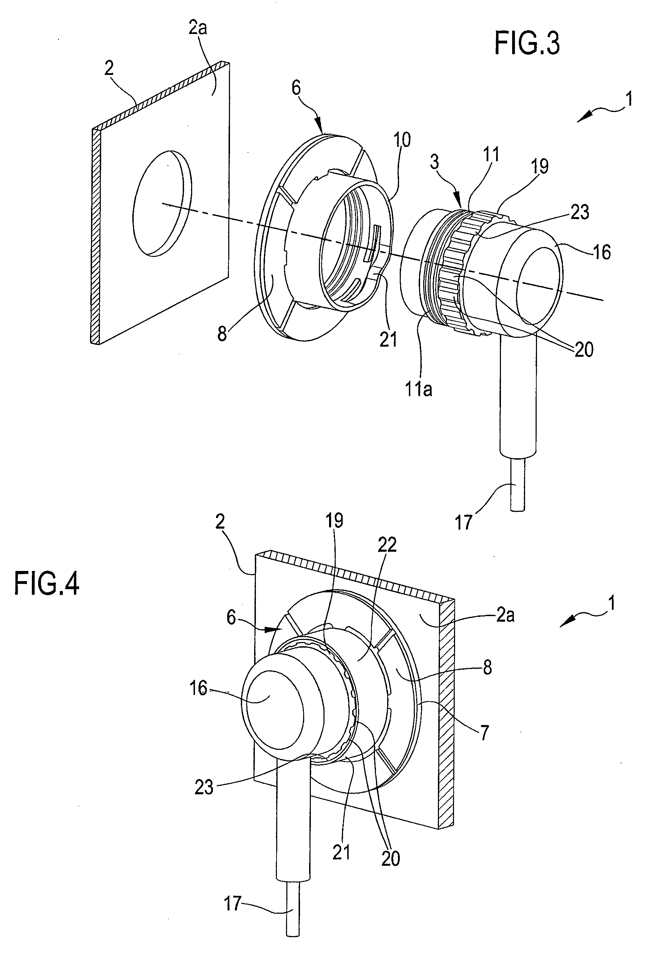

In a first example, the support body 3 housing the transducer body 5 can be inserted internally of the anchoring element 6 and the support body and/or the anchoring element can be rotated such as to cause reciprocal engagement of the threadings 10a and 11a and thus the axial movement of the support body 3 with respect to the anchoring element 6. By flanking the anchoring body to the internal wall of the bumper or other protection element 2, the support body 3 can be rotated relatively to the anchoring element 6 up to positioning the front surface 5a of the transducer body 5 exactly flush with the external surface 2b of the bumper or other protection element 2. As can be seen in figures 3 and 4, showing the device 1 coupled to walls of different thicknesses, it is possible, thanks to the type of coupling described, to axially move the support body 3 and thus the front surface 5a up to realising the desired position independently of the thickness of the bumper wall 2. When rotating the support body 3 with respect to the element 6, the cooperation between the projections and the elastic tongue enables the user to count the clicks of the tongue during the rotation of the body 3 and thus to be exactly aware of the entity of the axial advancement of the body 3. The cooperation between projections and the tongue also gives a pleasant sensation of click-rotation of the support body, enabling a user to have an intuitive sense of the entity of the movement imparted on the support body 3. Once certain that the front surface 5a of the transducer body 5 is perfectly flush with the external surface 2b, the flange 7 can be fixed to the internal wall 2a. Alternatively to what is described, it is also possible to calibrate the entity of axial displacement, i.e. the number of clicks between successive angularly stable positions, which the support body 3 has to perform in order to enable a correct positioning of the transducer body. In this way, it is priorly possible to determine the number of clicks to be performed according to the type of bumper (and thus of the thickness thereof) on which the device 1 is assembled. Consequently it is possible to priorly assemble the support body 3 to the anchoring element, by relatively rotating the two up to reaching a desired angular position that is a function of the thickness of the bumper to which the device 1 is to be fixed. Then the whole device can be mounted and fixed to the bumper, by fastening the flange 8 to the internal surface 2a of the bumper at one of the holes 24 destined to house the front part of the transducer body 5, without further proof of positioning before the definitive fastening.

In a further alternative it is also possible to priorly fix the anchoring element 6 to the internal surface of the bumper 2 and then insert the support body 3 housing the transducer body 5 internally of the anchoring element 6 and rotate the support body such as to cause the reciprocal engagement of the threads 10a and 11a and thus the axial movement of the support body 3 with respect to the anchoring element 6 up to positioning the front surface 5a of the transducer body 5 exactly flush with the external surface 2b of the bumper 2.

Note that the connecting element 16 is typically assembled at the end of the above-described operations although in principle should the connecting element be free to rotate with respect to the support body 3, the assembly of the support body 3 and the connecting element 16 might be assembled to one another and then coupled to the bumper according to one of the described processes without the rotation of the support body 3 causing the rotation of the connecting element 16 with the problems of interference which it would incur.

Note also that should the sensor body 5 require a predetermined angular position (due to the polarising of the transducer), thanks to the relative rotation between the anchoring element 6 and the support body 3 the angular position of the transducer body 5 can be first found, and then the transducer body can be axially positioned by acting only on the anchoring element 6 and fixing the anchoring element 6 to the surface 2b only after the desired axial position and the desired angular position of the transducer body 5 has been reached.

As for materials, the anchoring element 6 and the support body 3 are made of relatively rigid materials, such as rigid plastics, while the seal elements are made of considerably softer and elastic materials with respect to those used for the anchoring element 6 and the support body 3, with the aim of guaranteeing the desired seal effects against agents of various types.

## Claims

1. A transducer device for vehicle protection elements, the transducer device comprising:
at least a transducer organ (5);
at least a support body (3) defining a seating (4) for receiving the transducer organ (5), which is at least partially housed internally of the seating (4) and is axially solidly constrained to the support body (3), and
an anchoring element (6) having:
a first portion (7), fixable to an internal surface (2a) of the protection element,
and
at least a second portion (10), able to engage with a corresponding engaging portion (11) borne by the support body (3),
a portion of either the second portion (10) or the engaging portion (11) having a recess or a plurality of recesses cooperating with at least a protuberance borne by another of the second portion (10) and the engaging portion (11) in order to define a plurality of relative positions between the support body (3) and the anchoring element (6) which positions are axially different from one another.

2. The device of claim 1, wherein the engaging portion (11) and the second portion (10) are coupled by relative rotation about a common axis (12) such that following a relative rotation between the second portion (10) and the engaging portion (11) there is a relative axial translation between the support body and the anchoring element.

3. The device of claim 1, wherein the second portion (10) comprises an active surface (10a) defining the recesses and inclined with respect to the common rotation axis (12), the active surface (10a) being able to join with at least a corresponding active surface (11a) defined by the engaging portion (11) and defining a plurality of the protuberances, cooperation between the active surfaces (10a, 11a) enabling positioning the support body (3) and the transducer organ (5) in the plurality of relative positions with respect to the anchoring element (6).

4. The device of any one of the preceding claims, wherein the recess or recesses form a threading capable of engaging with a corresponding threading defined by the one or more protuberances.

5. The device of any one of the preceding claims, wherein the support body (3) comprises a terminal centring lip (24) destined to insert and guide the device (1) in a hole present on a bumper or other protection element (2), an axial extension of the seating (4) being substantially equal to an axial extension of the transducer organ (5) which is therefore entirely housed internally of the seating (4) such that a front surface (5a) of the transducer organ (5) is substantially flush with an attaching edge (24a) of the centring lip (24).

6. The device of preceding claim 4 or 5, wherein the threading of the engaging portion (11) is present on a radially external surface of the support body (3) and inserts in the threading associated to the second portion (10), which extends on a radially internal surface of the anchoring element (6).

7. The device of any one of the preceding claims, wherein at least a seal element (13) is provided, interposed between a lateral external surface of the transducer organ (5) and an internal surface of the support body (3) and/or between an external lateral surface of the transducer organ (5) and the anchoring element (6), optionally wherein:
the device comprises a further seal element (27) axially separated from the seal element (13), optionally in which the seal element (13) exhibits a smaller axial extension with respect to an axial extension of the transducer organ (5) and the further seal element (27) is fixed to the anchoring element (6).

8. The device of any one of the preceding claims, wherein at an opposite end with respect to the engaging portion (11) the body (3) comprises a terminal portion (15) destined to engage a connecting part (16) which comprises a portion housing a cable or a plurality of cables (17) and a portion connected to the terminal portion (15) such that the support body (3) and the connecting part (16) can either be angularly solidly constrained or can rotate relatively to one another about the axis (12).

9. The device of any one of the preceding claims, wherein the engaging body (3) comprises, at an external surface thereof and in an axially consecutive position to the engaging portion (11), a further portion (19) provided with a plurality of radial elements (20), optionally having a same axial extension, destined to cooperate with at least a counter-element (21) borne by a guide portion (22) of the anchoring element.

10. The device of the preceding claim, wherein the radial elements (20) comprise angularly equi-distanced projections defining a cogged profile and wherein the guide portion (22) exhibits the counter-element (21) in a form of an
elastic portion able to flex in a radial direction in order to cooperate with the projections and define a plurality of stable positions, angularly spaced to one another, in which the elastic portion engages gullies (23), each defined between two angularly-consecutive projections.

11. The device of any one of the preceding claims, wherein the first portion (7) of the coupling element (6) comprises an annular flange (8) destined to engage with an internal surface (2a) of the protecting element (2).

12. The device of any one of the preceding claims, wherein a surface of the active surfaces (10a and 11a) comprises a plurality of recesses (25) which are axially spaced, while another of the active surfaces (11a and 10a) comprises one or more elastic teeth (26) able to engage with the recesses (24) such that the support body (3) can be positioned in a plurality of different axial positions with respect to the engaging element (6).

13. A bumper, comprising one or more of the devices of any one of the preceding claims, each device being engaged in a respective through-seating afforded on a wall of the bumper.

14. An assembly process of a device (1) of any one of the preceding claims from 1 to 13, for example on a bumper or another protecting element and/or aesthetic finishing element of a vehicle, the procedure comprising stages of:
coupling the support body (3) housing the transducer organ (5) to the anchoring element (6),
axially moving the support body (3) with respect to the anchoring element (6) up to reaching a relative axial position between the support body (3) and the anchoring element (6) which is such as to bring about a desired positioning of the front surface (5a) of the transducer organ (5) once the anchoring element (6) is fixed to the internal wall (2a),
fastening the anchoring element (6) to the internal wall (2a) of the bumper or
other protecting element and/or aesthetic finishing element of the vehicle at a through-seating afforded on the wall, the fastening stage being performable:
before the coupling stage of the support body with the anchoring element, or
after the coupling stage but before the axial movement stage, or after the axial movement stage.

## Patentansprüche

1. Wandlervorrichtung für Fahrzeugschutzelemente, die Wandlervorrichtung umfassend:
mindestens ein Wandlerorgan (5);
mindestens einen Tragkörper (3), der eine Aufnahme (4) zum Empfangen des Wandlerorgans (5) definiert, das zumindest teilweise innerhalb der Aufnahme (4) untergebracht ist, und axial solide am Tragkörper (3) festgehalten wird, und
ein Ankerelement (6), aufweisend:
einen ersten Teil (7) fixierbar an einer inneren Oberfläche (2a) des Schutzelements,
und
mindestens einen zweiten Teil (10), eingriffsfähig mit einem entsprechenden Eingriffsteil (11), der von dem Tragkörper (3) getragen wird,
wobei ein Teil entweder des zweiten Teils (10) oder des Eingriffsteils (11) eine Vertiefung oder eine Mehrzahl von Vertiefungen aufweist, die mit mindestens einem Vorsprung zusammenwirken, der von dem anderen des zweiten Teils (10) oder des Eingriffsteils (11) getragen wird, um eine Mehrzahl von relativen Positionen zwischen dem Tragkörper (3) und dem Ankerelement (6) zu definieren,
wobei die Positionen sich voneinander axial unterscheiden.

2. Vorrichtung nach Anspruch 1, wobei der Eingriffsteil (11) und der zweite Teil (10) durch relative Rotation um eine gemeinsame Achse (12) aneinander gekoppelt sind, sodass, einer relativen Rotation zwischen dem zweiten Teil (10) und dem Eingriffsteil (11) folgend, eine relative axiale Translation zwischen dem Tragkörper und dem Ankerelement stattfindet.

3. Vorrichtung nach Anspruch 1, wobei der zweite Teil (10) eine aktive Oberfläche (10a) umfasst, die die Vertiefungen definiert und in Bezug auf die gemeinsame Rotationsachse (12) geneigt ist, wobei die aktive Oberfläche (10a) dazu fähig ist, sich mit mindestens einer entsprechenden aktiven Oberfläche (11a) zu verbinden, die durch den Eingriffsteil (11) definiert wird und die eine Mehrzahl von Vorsprüngen definiert, wobei ein Zusammenwirken zwischen den aktiven Oberflächen (10a, 11a) ein Positionieren des Tragkörpers (3) und des Wandlerorgans (5) in der Mehrzahl von relativen Positionen in Bezug auf das Ankerelement (6) ermöglicht.

4. Vorrichtung nach einem der vorhergehenden Ansprüche, wobei die Vertiefung oder Vertiefungen ein Gewinde bilden, das dazu geeignet ist, in ein entsprechendes Gewinde einzugreifen, das von den einen oder mehreren Vorsprüngen definiert wird.

5. Vorrichtung nach einem der vorhergehenden Ansprüche, wobei der Tragkörper (3) eine Abschlusszentrierlippe (24) umfasst, die dafür vorgesehen ist, die Vorrichtung (1) in ein Loch, das auf einem Stoßfänger oder einem anderen Schutzelement (2) vorhanden ist, einzusetzen und zu führen, wobei eine axiale Ausdehnung der Aufnahme (4) im Wesentlichen gleich einer axialen Ausdehnung des Wandlerorgans (5) ist, das deshalb vollständig innerhalb der Aufnahme (4) untergebracht ist, sodass eine vordere Oberfläche (5a) des Wandlerorgans (5) im Wesentlichen mit einer Befestigungskante (24a) der Zentrierlippe (24) bündig ist.

6. Vorrichtung nach den vorhergehenden Ansprüchen 4 oder 5, wobei das Gewinde des Eingriffsteils (11) auf einer radial äußeren Oberfläche des Tragkörpers (3) vorhanden ist und in das Gewinde eingesetzt werden kann, dass dem zweiten Teil (10) zugehört und sich auf einer radial inneren Oberfläche des Ankerelements (6) erstreckt.

7. Vorrichtung nach einem der vorhergehenden Ansprüche, wobei mindestens ein Dichtungselement (13) bereitgestellt ist, angeordnet zwischen einer seitlichen äußeren Oberfläche des Wandlerorgans (5) und einer inneren Oberfläche des Tragkörpers (3) und/oder zwischen einer äußeren seitlichen Oberfläche des Wandlerorgans (5) und dem Ankerelement (6), vorzugsweise wobei:
die Vorrichtung ein weiteres Dichtelement (27) umfasst, axial getrennt vom Dichtelement (13), vorzugsweise wobei das Dichtelement (13) eine kleinere axiale Ausdehnung in Bezug auf eine axiale Ausdehnung des Wandlerorgans (5) hat und das weitere Dichtelement (27) am Ankerelement (6) fixiert ist.

8. Vorrichtung nach einem der vorhergehenden Ansprüche, wobei der Körper (3) an einem in Bezug auf das Eingriffsteil (11) gegenüberliegenden Ende einen Abschlussteil (15) umfasst, der dafür vorgesehen ist, in ein Verbindungsstück (16) einzugreifen, dass einen Teil umfasst, in dem eine Leitung oder eine Mehrzahl von Leitungen (17) untergebracht sind, und einen mit dem Abschlussteil (15) verbundenen Teil umfasst, sodass der Tragkörper (3) und der Verbindungsteil (16) entweder axial solide festgehalten werden können oder relativ zueinander um die Achse (12) rotieren können.

9. Vorrichtung nach einem der vorhergehenden Ansprüche, wobei der Eingriffskörper (3) an einer äußeren Oberfläche dessen und in axial nachfolgender Position zum Eingriffsteil (11) einen weiteren Teil (19) umfasst, der mit einer Mehrzahl von radialen Elementen (20) versehen ist, die vorzugsweise die gleiche axiale Ausdehnung aufweisen, dafür vorgesehen, mit mindestens einem Gegenelement (21) zusammenzuwirken, dass von einem Führungsteil (22) des Ankerelements getragen wird.

10. Vorrichtung nach dem vorhergehenden Anspruch, wobei die radialen Elemente (20) Auskragungen im gleichen Winkelabstand umfassen, die ein Zahnprofil definieren, und wobei der Führungsteil (22) das Gegenelement (21) in Form eines elastischen Teils hat, der in radialer Richtung biegefähig ist, um mit den Auskragungen zusammenzuwirken und eine Mehrzahl von stabilen Positionen zu definieren, zu einander winkelbeabstandet, wobei der elastische Teil in Rinnen (23) eingreift, wobei jede zwischen zwei im Winkel nachfolgenden Auskragungen definiert ist.

11. Vorrichtung nach einem der vorhergehenden Ansprüche, wobei der erste Teil (7) des Koppelelements (6) einen ringförmigen Flansch (8) umfasst, der dafür vorgesehen ist, in eine innere Oberfläche (2a) des Schutzelements (2) einzugreifen.

12. Vorrichtung nach einem der vorhergehenden Ansprüche, wobei eine Oberfläche der aktiven Oberflächen (10a und 11a) eine Mehrzahl an Vertiefungen (25) umfasst, die axial beabstandet sind, während eine andere der aktiven Oberflächen (10a und 11a) einen oder mehrere elastische Zähne umfasst, die dazu geeignet sind, in die Vertiefungen (24) einzugreifen, sodass der Tragkörper (3) in einer Mehrzahl von verschiedenen axialen Positionen in Bezug auf das Eingriffselement (6) positioniert werden kann.

13. Stoßfänger, umfassend eine oder mehrere Vorrichtungen nach einem der vorhergehenden Ansprüche, wobei jeder Vorrichtung in eine entsprechende Aufnahmeöffnung eingreift, die in einer Wand des Stoßfängers bereitgestellt ist.

14. Montageverfahren für eine Vorrichtung (1) nach einem der vorhergehenden Ansprüche von 1 bis 13, zum Beispiel an einem Stoßfänger oder anderem Schutzelement und/oder ästhetischem Außenbauteil eines Fahrzeugs, das Verfahren umfassend die Phasen:
Koppeln des Tragköpers (3), in dem das Wandlerorgan (5) untergebracht ist, mit dem Ankerelement (6),
axiales Bewegen des Tragkörpers (3) in Bezug auf das Ankerelement (6) bis zum Erreichen einer relativen axialen Position zwischen dem Tragkörper (3) und dem Ankerelement (6), die so beschaffen ist, dass eine gewünschte Positionierung der vorderen Oberfläche (5a) des Wandlerorgans (5) erzeugt wird, sobald das Ankerelement (6) an der inneren Wand (2a) fixiert ist,
Befestigen des Ankerelements (6) an der inneren Wand (2a) des Stoßfängers oder
anderen Schutzelements und/oder ästhetischen Außenbauteils des Fahrzeugs in einer Aufnahmeöffnung, die in der Wand bereitgestellt ist, wobei die Phase des Befestigens durchgeführt werden kann:
vor der Kopplungsphase des Tragkörpers mit dem Ankerelement, oder
nach der Kopplungsphase aber vor der Phase der axialen Bewegung, oder
nach der Phase der axialen Bewegung.

## Revendications

1. Dispositif transducteur pour des éléments de protection de véhicules, le dispositif transducteur comprenant:
au moins un organe transducteur (5);
au moins un corps de support (3) définissant un siège (4) apte à recevoir l'organe transducteur (5), qui est logé au moins partiellement à l'intérieur du siège (4) et est axialement relié de façon intégrale au corps de support (3), et
un élément d'ancrage (6) ayant:
une première portion (7) pouvant être fixée à une surface intérieure (2a) de l'élément de protection, et
au moins une deuxième portion (10) à même de s'engager avec une portion d'engagement correspondante (11) supportée par le corps de support (3),
une portion de la deuxième portion (10) ou de la portion d'engagement (11) ayant une cavité ou une pluralité de cavités coopérant avec au moins une protubérance supportée par une autre entre la deuxième portion (10) et la portion d'engagement (11), afin de définir une pluralité de positions relatives entre le corps de support (3) et l'élément d'ancrage (6),
lesquelles positions sont axialement différentes l'une de l'autre.

2. Dispositif selon la revendication 1, où la portion d'engagement (11) et la deuxième portion (10) sont couplées par rotation relative autour d'un axe commun (12), de sorte que après une rotation relative entre la deuxième portion (10) et la portion d'engagement (11) il y ait une translation axiale relative entre le corps de support et l'élément d'ancrage.

3. Dispositif selon la revendication 1, où la deuxième portion (10) comprend une surface active (10a) définissant les cavités et inclinée par rapport à l'axe de rotation commun (12), la surface active (10a) étant à même de se relier à au moins une surface active correspondante (11a) définie par la portion d'engagement (11) et définissant une pluralité de protubérances, la coopération entre les surfaces actives (10a, 11a) permettant le positionnement du corps de support (3) et de l'organe transducteur (5) dans la pluralité de positions relatives par rapport à l'élément d'ancrage (6).

4. Dispositif selon une quelconque des revendications précédentes, où la cavité ou les cavités forment un filetage à même de s'engager avec un filetage correspondant défini par l'une ou plusieurs protubérances.

5. Dispositif selon une quelconque des revendications précédentes, où le corps de support (3) comprend une lèvre de centrage terminale (24) apte à s'insérer dans et guider le dispositif (1) dans un trou présent sur un pare-chocs ou autre élément de protection (2), une extension axiale du siège (4) étant substantiellement égale à une extension axiale de l'organe transducteur (5) qui est donc complètement logé à l'intérieur du siège (4), de sorte que une surface frontale (5a) de l'organe transducteur (5) soit substantiellement au ras d'un bord de fixation (24a) de la lèvre de centrage (24).

6. Dispositif selon la revendication précédente 4 ou 5, où le filetage de la portion d'engagement (11) est présent sur une surface radialement extérieure du corps de support (3) et va s'insérer dans le filetage associé à la deuxième portion (10), qui s'étend sur une surface radialement intérieure de l'élément d'ancrage (6).

7. Dispositif selon une quelconque des revendications précédentes, où il est prévu au moins un élément d'étanchéité (13) placé entre une surface latérale extérieure de l'organe transducteur (5) et une surface intérieure du corps de support (3) et/ou entre une surface latérale extérieure de l'organe transducteur (5) et l'élément d'ancrage (6), de façon optionnelle où:
le dispositif comprend un autre élément d'étanchéité (27) axialement séparé de l'élément d'étanchéité (13), de façon optionnelle où l'élément d'étanchéité (13) présente une extension axiale inférieure par rapport à une extension axiale de l'organe transducteur (5), et
l'autre élément d'étanchéité (27) est fixé à l'élément d'ancrage (6).

8. Dispositif selon une quelconque des revendications précédentes, où à une extrémité opposée par rapport à la portion d'engagement (11) le corps (3) comprend une portion terminale (15) apte à engager une partie de connexion (16) comprenant une portion logeant un câble ou une pluralité de câbles (17) et une portion reliée à la portion terminale (15), de sorte que le corps de support (3) et la partie de connexion (16) puissent être angulairement reliés de façon intégrale ou puissent tourner l'un par rapport à l'autre autour de l'axe (12).

9. Dispositif selon une quelconque des revendications précédentes, où le corps d'engagement (3) comprend sur une surface extérieure et dans une position axialement consécutive par rapport à la portion d'engagement (11) une autre portion (19) munie d'une pluralité d'éléments radiaux (20), ayant de façon optionnelle la même extension axiale, aptes à coopérer avec au moins un contre-élément (21) supporté par une portion de guidage (22) de l'élément d'ancrage.

10. Dispositif selon la revendication précédente, où les éléments radiaux (20) comprennent des saillies équidistantes angulairement définissant un profil denté, et où la portion de guidage (22) présente le contre-élément (21) en forme de portion élastique apte à se plier dans une direction radiale afin de coopérer avec les saillies et définir une pluralité de positions stabiles, à une certaine distance angulaire l'une de l'autre, où la portion élastique engages des canaux (23), chacun étant défini entre deux saillies angulairement consécutives.

11. Dispositif selon une quelconque des revendications précédentes, où la première portion (7) de l'élément de couplage (6) comprend une embase annulaire (8) apte à s'engager avec une surface intérieure (2a) de l'élément de protection (2).

12. Dispositif selon une quelconque des revendications précédentes, où une surface des surfaces actives (10a et 11a) comprend une pluralité de cavités (25) à une certaine distance axiale, tandis que une autre des surfaces actives (11a et 10a) comprend une ou plusieurs dents élastiques (26) aptes à s'engager avec les cavités (24), de sorte que le corps de support (3) puisse être positionné dans une pluralité de positions axiales différentes par rapport à l'élément d'engagement (6).

13. Pare-chocs, comprenant un ou plusieurs des dispositifs selon une quelconque des revendications précédentes, chaque dispositif étant engagé dans un siège passant respectif présent sur une paroi du pare-chocs.

14. Procédé d'assemblage d'un dispositif (1) selon une quelconque des revendications précédentes 1 à 13, par exemple sur un pare-chocs ou autre élément de protection et/ou élément de finition esthétique d'un véhicule, la procédure comprenant les étapes suivantes:
coupler le corps de support (3) logeant l'organe transducteur (5) à l'élément d'ancrage (6),
déplacer axialement le corps de support (3) par rapport à l'élément d'ancrage (6) jusqu'à atteindre une position axiale relative entre le corps de support (3) et l'élément d'ancrage (6), de sorte à déterminer un positionnement désiré de la surface frontale (5a) de l'organe transducteur (5) une fois que l'élément d'ancrage (6) est fixé à la paroi intérieure (2a) ,
fixer l'élément d'ancrage (6) à la paroi intérieure (2a) du pare-chocs ou autre élément de protection et/ou élément de finition esthétique du véhicule sur un siège passant présent sur la paroi, l'étape de fixation pouvant être réalisée:
avant l'étape de couplage du corps de support avec l'élément d'ancrage, ou après l'étape de couplage mais avant l'étape de déplacement axial, ou après l'étape de déplacement axial.
